# EUROPEAN PATENT APPLICATION

(11) **EP 4 779 054 A1**
(43) Date of publication of application: **22.07.2026**
(21) Application number: 25153110.9
(22) Date of filing: 21.01.2025
(51) Int. Cl.: C23C 18/32, C25D 7/06, H01M 4/88, C25D 1/08, C25B 11/032

(54) **MICROMESH-BASED ELECTRODES AND METHOD OF FABRICATION THEREOF**

(71) Applicant: Chen, Liyang, 5200 Brugg (CH); Schenker, Moritz, 5200 Brugg (CH)
(72) Inventor: Chen, Liyang, 5200 Brugg (CH); Schenker, Moritz, 5200 Brugg (CH)
(74) Representative: Beck & Rössig European Patent Attorneys

(57) **Abstract**

The present invention relates to a method for fabricating micromesh electrodes, the method comprising: (a) developing a micromesh template on a base; (b) depositing at least one metallic layer onto the micromesh template, forming the micromesh electrodes; (c) removing the photoresist film from the base; and, (d) peeling the micromesh electrodes from the base. The present invention also relates to a system for fabricating micromesh electrodes for use in electrolysis, the system comprising: a micromesh template; and, a metallic layer, deposited on the micromesh template to form the micromesh electrodes.

## Description

### FIELD OF THE INVENTION

The present invention relates to the field of electrolysis technology. More specifically, the present invention relates to a system and method of fabricating micromesh electrodes for use in electrolysis processes.

### BACKGROUND OF THE INVENTION

Electrolysis processes such as water splitting for hydrogen production and carbon dioxide reduction are application-specific but require efficient electrodes. An electrolysis process largely depends on the reaction capacity of the electrodes, their current spreading efficiency, and gas bubbles. However, traditional electrode structures still encounter major bottlenecks that restrict their effectiveness, scalability and economic viability.

There are several issues with existing electrode technologies. For example, woven nickel mesh electrodes are made of interwoven strands, which may be incapable of establishing consistent electrical contact. This leads to a nonuniform distribution of current throughout the surface of the electrode. Therefore, lower electrochemical reaction rates are witnessed, which in turn diminish the overall efficiency. The geometry of the woven and expanded nickel mesh designs traps gas bubbles that are generated in the course of electrolysis within the mesh. The bubbles occlude reaction sites, diminishing the active area available to support useful electrochemical reaction and degrading overall electrode performance.

Additionally, both woven and expanded nickel mesh electrodes require substantial amounts of material for mechanical stability and area of interest. This increases the cost and weight of such electrodes and hence poses challenges in scalability at an industrial level. On the other hand, expanded nickel mesh electrodes are more mechanically stable, yet they have an irregular surface, which contributes to non-uniform current distribution. This irregularity makes the gas trapping worse and poorly efficient bubble removal, which decreases the performance of the electrode.

These issues are further illustrated in several prior arts that employ mesh-electrode or fabricate said mesh electrode for multiple uses, including but not limited to electrolysis processes.

For example, Chinese Patent No. 109802013B discloses a flexible transparent electrode, in particular to an embedded metal mesh, but to be used in electronic devices. The fabrication of the mesh electrode in this invention uses a plurality of conductive materials such as a gold grid template and silicon substrate. By depositing metal layer on a metal plating layer and exposing the metal to the UV light, the metal is cured and a mesh is formed. Alternatively, a photolithography technique can be employed to form the mesh as well. However, the steps involved in this invention are not cost-effective as there is a likelihood that more metal is required to achieve mechanical stability and surface area.

International Patent Publication No. 2019232576A1 may have disclosed an electrode for the hydrogen evolution reaction, comprising: a conductive substrate, and an electrocatalytic composition on the conductive substrate at an electrode surface, wherein the electrocatalytic composition comprises a mixed metal oxide selected from a cuprous oxomolybdate, a cuprous oxotungstate and mixtures thereof. However, mixed metal oxide-based electrodes might not have a high surface area monolithic type microstructure, which then leads to smaller active surface areas that slow transmission electrochemical reactions slowing all redox currents and magnifying overpotentials, directly abating overall efficiencies.

Chinese Patent Application No. 102593194A disclosed a transparent electrode substrate and manufacturing approach thereof and it has a transparent electrode substrate for use in electronic equipment and the solar cell. However, this invention requires repetitive layering process and may limit the flexibility in designing complex and intricate mesh patterns. Additionally, it could introduce variations in mesh thickness and uniformity, leading to inconsistencies in electrochemical performance.

Lastly, European Patent No. 0614126A1 may have disclosed a method of formation of a photoresist pattern on the surface of a substrate, and more particularly a method of forming a pattern conductive copolymerized photoresist on a semiconductor substrate, for example, silicon. The invention also relates to a photoresist solution comprising an oxidizing compound particularly suitable for the implementation of said method. This invention relies on conventional etching techniques, which require expertise, additional chemicals, and increased costs.

This creates a clear need for the use of electrodes that can ensure proper current distribution, efficient removal of evolved gas bubbles, minimal materials and better overall electrochemical performance.

### SUMMARY OF THE INVENTION

It is an objective of the present invention to provide an improved metallic micromesh-based electrodes for use in electrolysis and its method of fabrication to reduce uneven current distribution that leads to low efficiency during electrolysis process.

It is also an objective of the present invention to provide an improved metallic micromesh-based electrodes for use in electrolysis and its method of fabrication to prevent blockage of reaction sites due to the gaps between the mesh and eventually create dead zones, causing gas bubbles to accumulate and thus, reducing electrolytic performance.

Another objective of the present invention is to provide an improved metallic micromesh-based electrodes for use in electrolysis and its method of fabrication to reduce costs by reducing the need for more metal to achieve mechanical stability and surface area.

Accordingly, these objectives can be achieved by following the teachings of the present invention, which relates to a method for fabricating micromesh electrodes for electrolysis, the method comprising: (a) developing a micromesh template on a base; (b) depositing at least one metallic layer onto the micromesh template, forming the micromesh electrodes; (c) removing the photoresist film from the base; and, (d) peeling the micromesh electrodes from the base.

These objectives can also be achieved by following the teachings of a system for fabricating micromesh electrodes for use in electrolysis, the system comprising: a micromesh template; and, at least one metallic layer, deposited on the micromesh template to form the micromesh electrodes.

### BRIEF DESCRIPTION OF THE DRAWINGS

The features of the invention will be more readily understood and appreciated from the following detailed description when read in conjunction with the accompanying drawings of the preferred embodiment of the present invention, in which:
**FIG. 1** illustrates a method for fabricating the micromesh electrodes;
**FIG. 2** illustrates an embodiment of the present invention after fabrication;
**FIG. 3** illustrates layers for developing the micromesh template;
**FIG. 4** illustrates an application of the micromesh electrodes in a typical electrolyzer;
**FIG. 5** illustrates the distance between two holes of the micromesh under Scanning Electron Microscope (SEM) in one embodiment;
**FIG. 6** illustrates the distance between two holes of the micromesh under Scanning Electron Microscope (SEM) in another embodiment;
**FIG. 7** illustrates the distance between two holes of the micromesh under Scanning Electron Microscope (SEM) in another embodiment;
**FIG. 8** illustrates the diameter of the micromesh hole under Scanning Electron Microscope (SEM) in one embodiment;
**FIG. 9** illustrates the diameter of the micromesh hole under Scanning Electron Microscope (SEM) in another embodiment;
**FIG. 10** illustrates the diameter of the micromesh hole under Scanning Electron Microscope (SEM) in another embodiment;
**FIG. 11** illustrates the thickness of the micromesh under Scanning Electron Microscope (SEM) in one embodiment; and,
**FIG. 12** illustrates the thickness of the micromesh under Scanning Electron Microscope (SEM) in another embodiment.

### DETAILED DESCRIPTION OF THE PREFERRED EMBODIMENT

For the purposes of promoting and understanding the principles of the invention, reference will now be made to the embodiments illustrated in the drawings and described in the following written specification. It is understood that the present invention includes any alterations and modifications to the illustrated embodiments and includes further applications of the principles of the invention as would normally occur to one skilled in the art to which the invention pertains.

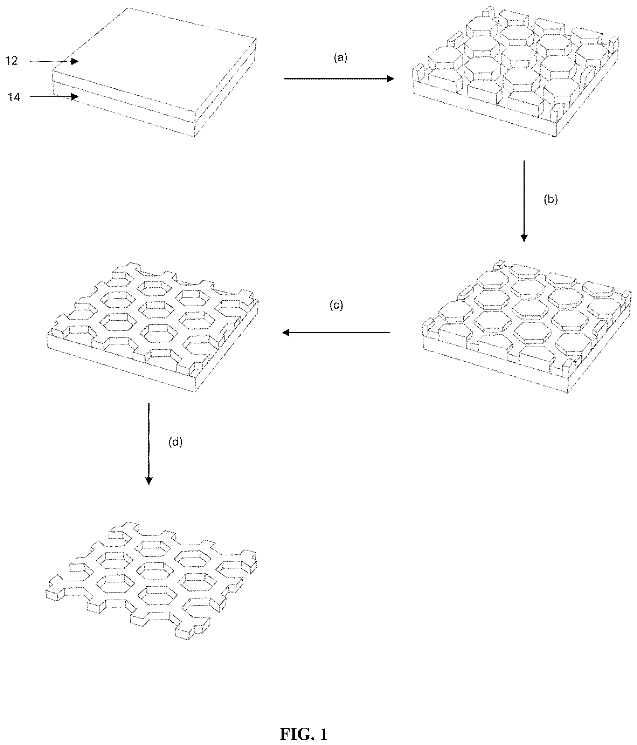

Generally, the present invention teaches a method for fabricating micromesh electrodes **10** for electrolysis, the method comprising: (a) developing a micromesh template on a base **14;** (b) depositing at least one metallic layer onto the micromesh template, forming the micromesh electrodes **10;** (c) removing the photoresist film **12** from the base **14;** and, (d) peeling the micromesh electrodes **10** from the base **14.** An overview of the overall steps is further illustrated in **FIG.1**.

In one embodiment, the method further comprises: depositing a layer of a catalyst onto the micromesh electrodes **10** during step (b), after step (c) or after step (d).

In one embodiment, the deposition of the layer of the catalyst onto the micromesh electrodes **10** during step (b), after step (c) or after step (d), further comprises: depositing the layer of the catalyst by means of a chemical reaction, electroplating and the like. For example, after the micromesh is peeled off, a thin catalytic layer can be deposited on the micromesh electrodes **10** through chemical reactions, electroless plating, or other methods. This step is preferable because it enhances the electrochemical properties of the electrodes and improves efficiency for specific electrolysis applications, such as water or CO₂ electrolysis. This is particularly more preferable because it further enhances electrochemical activity, optimizing the electrode's performance for specific reactions by allowing flexibility in choice of catalysts (other metals/metal alloys, mixed metal oxides, etc.).

In one embodiment, step (a) further comprises: applying a photoresist film **12** onto the base **14;** and, exposing the photoresist film **12** to a light source through a patterned mask to develop the micromesh template. More specifically, this step is performed by a photolithography method. This method allows precise definition of the areas where the metal deposition will occur, allowing for control over the mesh size and ensuring fast gas bubble removal, which enhances electrolysis efficiency. More specifically, it further provides a precise geometry of the micromesh and ensures that the microstructures are accurately patterned, allowing precise control over the mesh design, which reduces overpotentials and enhances current distribution.

In one embodiment, step (b) further comprises: selecting the metallic layer from a group comprising metals, alloys or metal-alloys. More specifically, this is performed by electroplating the metallic layer onto the exposed areas of the substrate, forming the micromesh electrodes **10.**

In a non-limiting example, nickel can be integrated and potential catalysts into the micromesh electrodes **10,** ensuring mechanical robustness and optimal electrochemical performance while using significantly less material, making it more cost-effective and sustainable.

In one embodiment, a light source may be present, and it may include but not limited to electron beams, X-rays, EUV, UV, visible or infrared light.

In one embodiment, step (d) further comprising: peeling off the micromesh electrodes **10** from the base **14** using a peeling device. This is crucial in order to obtain free-standing micromesh with flexibility, hence, enabling easy integration into electrolysis setups. Additionally, the peeling device may be any device that has the capacity to peel off a thin layer of micromesh, including but not limited to a tweezer.

In one embodiment, the method is used in devices selected from the group consisting of electrolyzers, light-emitting diodes (LEDs), batteries and fuel cells.

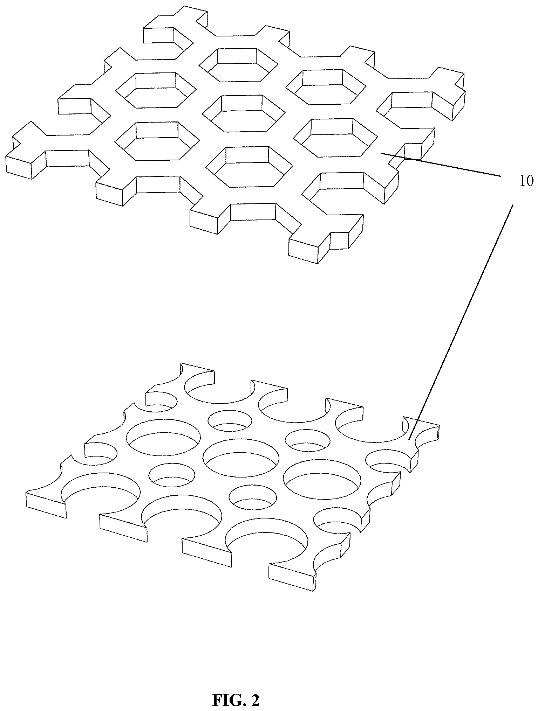

The present invention also teaches a system for fabricating micromesh electrodes **10,** the system comprising: a micromesh template; and, at least one metallic layer, deposited on the micromesh template to form the micromesh electrodes **10.** In view of this, **FIG. 2** illustrates an example of the micromesh electrodes **10** fabricated using this method. Additionally, the shape of the mesh can be of any shape, including but not limited to round, diamond, hexagon, square etc.

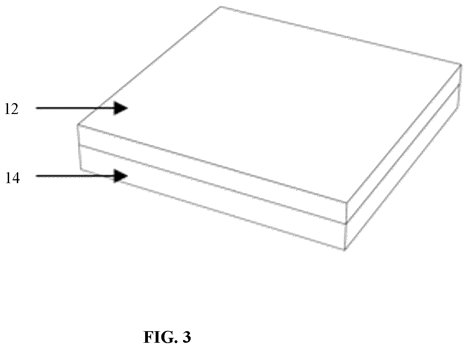

In one embodiment, the micromesh template further comprises a base **14** and a photoresist layer **12** exposed to a light source through a patterned mask to form the micromesh template. The layering of the base **14** and the photoresist layer **12** is further illustrated in **FIG. 3****.**

In one embodiment, the base **14** is a conductive material that includes is but not limited to a metal sheet or FTO-coated glass.

In one embodiment, the micromesh electrodes **10** are monolithic.

In one embodiment, the at least one metallic layer is selected from a group of conductive metals, alloys or metal-alloys.

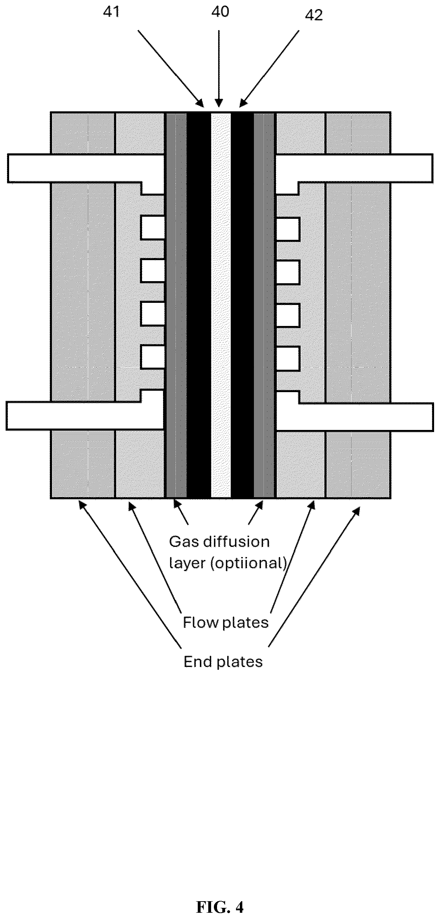

In one embodiment, the micromesh electrodes **10** are free-standing electrodes. This is particularly advantageous for the present invention as it is made to be adaptable for various types of electrolyzers. An example of the application of the present invention in a typical electrolyzer is depicted in **FIG. 4****,** where a zero-gap structure is used with a diaphragm **40** or a membrane (proton exchange membrane or anion exchange membrane) sandwiched between the micromesh anode **41** and the micromesh cathode **42.**

In one embodiment, the micromesh electrodes **10** have at least one mesh hole with a diameter between 8 to 199 µm and a thickness above 6 µm.

In one embodiment, the micromesh electrodes **10** have a spacing of 9 to 104 µm between two adjacent mesh holes.

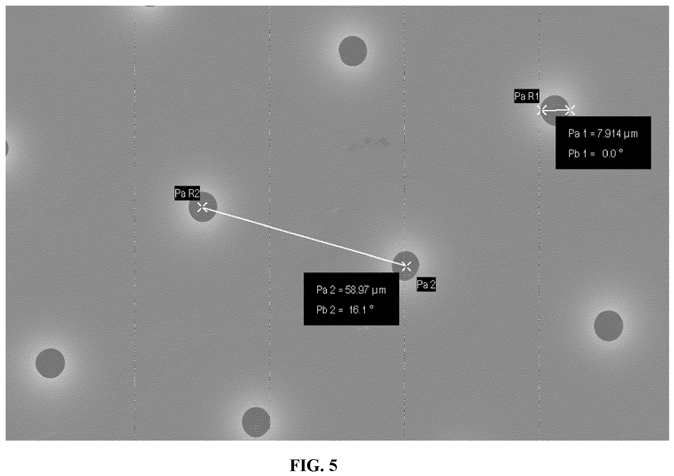

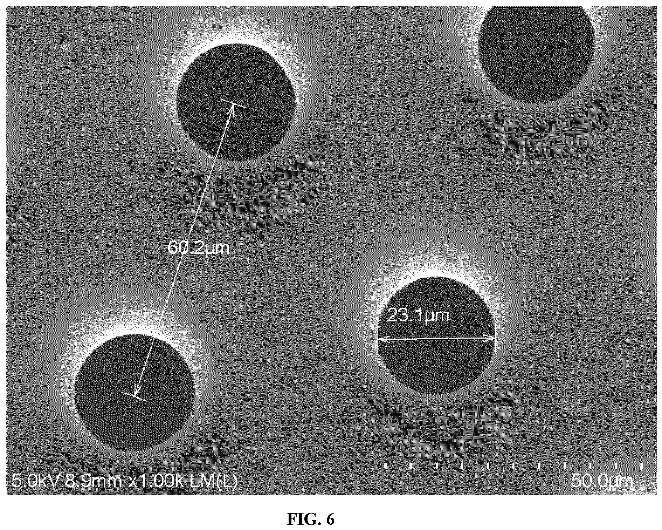

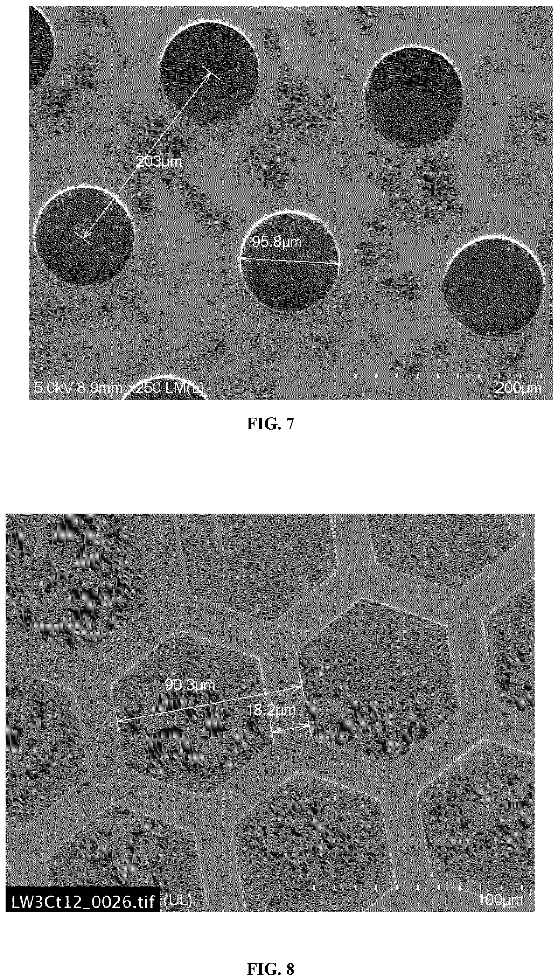

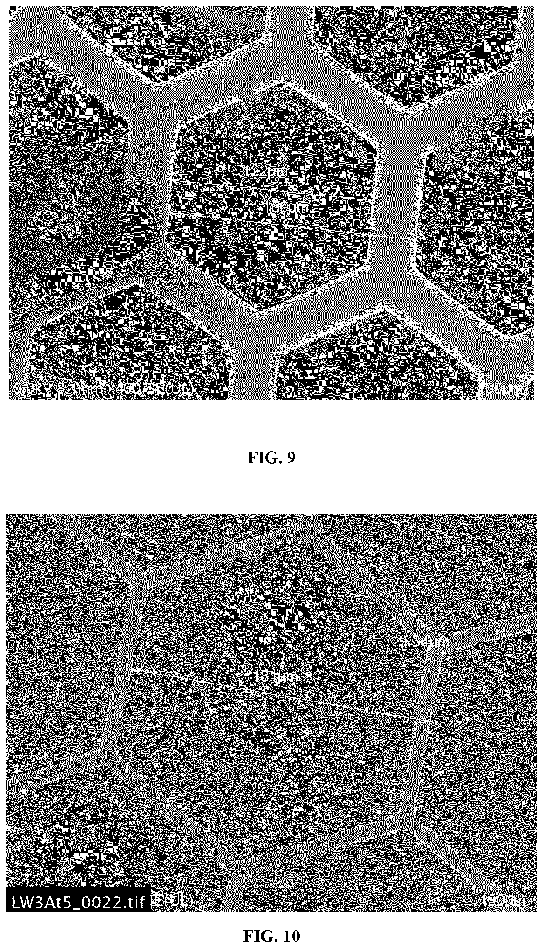

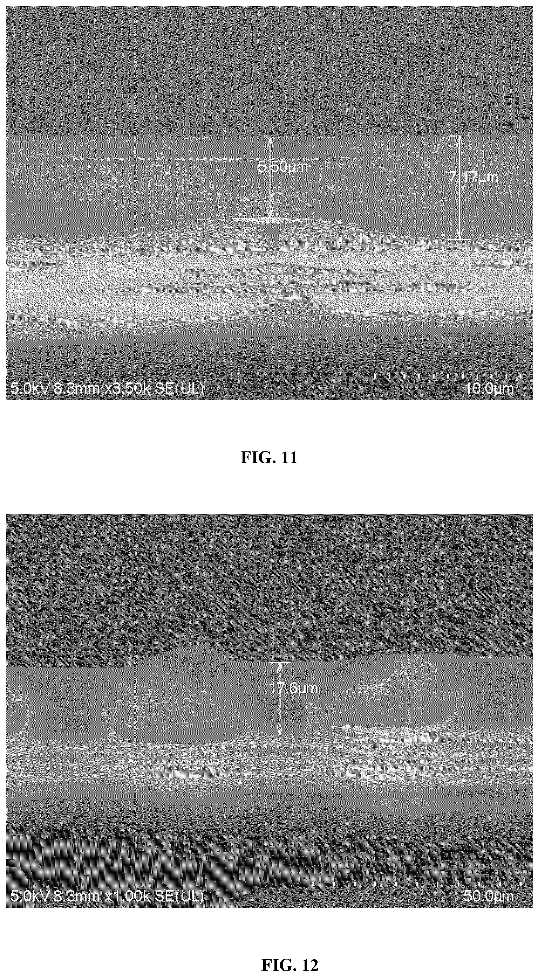

The above is illustrated in **FIG. 5** to **FIG. 12****,** where variations in distances, diameters and thickness are recorded based on the use of the microelectrodes or the specific requirements of the devices employing these electrodes.

In one embodiment, the micromesh electrodes **10** have shapes including hexagonal, circular, oval or square.

More specifically, the present invention provides electrodes based on metallic micromesh framework for general electrolysis process. The monolithic micromesh electrodes **10** have metallic backbones, such as nickel, copper, and silver. The micromesh features micro hole diameter and mesh thickness ranging from tens of microns to hundreds of microns. A thin catalytic layer can be optionally deposited on the metallic backbone through chemical reaction or coating techniques such as spray coating, electroplating, electroless plating, sputtering deposition, etc. Such metallic micromesh-based electrodes are used for electrolysis process in water electrolyzers and carbon dioxide electrolyzers.

The microstructure of micromesh in this present invention changes the surface wettability of the electrodes, controls the gas bubble size, and accelerates the removal of gas bubbles from the electrode surface. Therefore, the monolithic micromesh structure of the electrode improves the electrolysis efficiency compared to electrodes with other geometry and topology.

The monolithic micromesh electrodes **10** are able to overcome the limitations of traditional woven and expanded nickel mesh electrodes by offering a uniform microstructure with several key benefits. The monolithic microstructure provides a significantly higher active surface area, which enhances electrochemical reactions and reduces overpotentials, making the electrolysis process more efficient. Additionally, the precise control over mesh size and structure allows for optimized gas bubble removal, minimizing the accumulation of bubbles that typically block reaction sites in conventional mesh electrodes. This precise size control ensures faster bubble removal and more efficient current distribution, which directly addresses the inefficiencies seen in woven and expanded nickel mesh solutions, where uneven surfaces lead to trapped gas and poor performance.

Another major improvement is the substantial reduction in material usage. By employing a monolithic design, the micromesh electrodes **10** require far less nickel compared to traditional woven or expanded mesh electrodes, which need more material to maintain mechanical stability. This not only makes the present invention more cost-effective but also promotes sustainability by minimizing resource consumption. The reduction in nickel usage results in lighter, more scalable electrodes, offering significant cost savings and environmental benefits, particularly when scaled for industrial applications.

It is also disclosed that the present invention employs lithography-based fabrication method, which ensures consistent and high-quality production of the micromesh structure, The present invention eventually provides a more efficient, cost-effective, and sustainable alternative to existing nickel mesh-based electrodes.

The present invention explained above is not limited to the aforementioned embodiment and drawings, and it will be obvious to those having an ordinary skill in the art of the present invention that various replacements, deformations, and changes may be made without departing from the scope of the invention.

## Claims

1. A method for fabricating micromesh electrodes (10), the method comprising:
(a) developing a micromesh template on a base (14);
(b) depositing at least one metallic layer onto the micromesh template, forming the micromesh electrodes (10);
(c) removing the photoresist film (12) from the base (14); and,
(d) peeling the micromesh electrodes (10) from the base (14).

2. The method according to claim 1, wherein the method further comprises:
depositing a layer of a catalyst onto the micromesh electrodes (10) during step (b), after step (c) or after step (d).

3. The method according to claim 2, wherein the deposition of the layer of the catalyst onto the micromesh electrodes (10) during step (b), after step (c) or after step (d), further comprises:
depositing the layer of the catalyst by means of a chemical reaction, electroplating and the like.

4. The method according to one of claims 1 to 3, wherein step (a) further comprises:
applying a photoresist film (12) onto the base (14); and,
exposing the photoresist film (12) to a light source through a patterned mask to develop the micromesh template.

5. The method according to one of claims 1 to 4, wherein step (b) further comprises:
selecting the metallic layer from a group comprising metals, alloys or metal-alloys.

6. The method according to one of claims 1 to 5, wherein the method is used in devices selected from the group consisting of electrolyzers, light-emitting diodes (LEDs), batteries and fuel cells.

7. A system for fabricating micromesh electrodes (10), the system comprising:
a micromesh template; and,
a metallic layer, deposited on the micromesh template to form the micromesh electrodes (10).

8. The system according to claim 7, wherein the micromesh template further comprises a base (14) and a photoresist layer (12), exposed to a light source through a patterned mask to form the micromesh template.

9. The system according to claim 8 wherein the base (14) is a conductive material that includes but is not limited to a metal sheet or FTO-coated glass.

10. The system according to one of claims 7 to 9, wherein the micromesh electrodes (10) are monolithic.

11. The system according to one of claims 7 to 10, wherein the metallic layer is selected from a group of conductive metals, alloys or metal-alloys.

12. The system according to one of claims 7 to 11, wherein the micromesh electrodes (10) are free-standing electrodes.

13. The system according to one of claims 7 to 12, wherein the micromesh electrodes (10) have at least one mesh hole with a diameter between 8 to 199 µm and a thickness above 6 µm.

14. The system according to one of claims 7 to 13, wherein the micromesh electrodes (10) have a spacing of 9 to 104 µm between two adjacent mesh holes.

15. The system according to one of claims 7 to 14, wherein the micromesh electrodes (10) have shapes including hexagonal, circular, oval or square.
